# EUROPEAN PATENT SPECIFICATION

(11) **EP 4 545 997 B1**
(45) Date of publication and mention of the grant of the patent: **06.05.2026**
(21) Application number: 23205476.7
(22) Date of filing: 24.10.2023
(51) Int. Cl.: G01S 5/00, G01S 5/02, H04W 4/80, H04W 64/00

(54) **METHOD FOR CONFIGURING A DEVICE FOR SHORT-RANGE POSITIONING, DEVICE AND LOCATION SERVER**
VERFAHREN ZUM KONFIGURIEREN EINER VORRICHTUNG ZUR NAHBEREICHSPOSITIONIERUNG, VORRICHTUNG UND LOKALISIERUNGSSERVER
PROCÉDÉ DE CONFIGURATION D'UN DISPOSITIF DE POSITIONNEMENT À COURTE PORTÉE, DISPOSITIF ET SERVEUR DE LOCALISATION

(43) Date of publication of application: 30.04.2025
(73) Proprietor: u-blox AG, 8800 Thalwil (CH)
(72) Inventor: Karlsson, Peter, 8800 Thalwil (CH); Carlberg, Erik, 8800 Thalwil (CH)
(74) Representative: Epping - Hermann - Fischer

(56) References cited:
- WO-A1-2022/020037
- US-A1- 2021 410 102
- RITESH SHREEVASTAV ET AL: "Adding support for Bluetooth AoA/AoD", vol. 3GPP RAN 2, no. Xiamen, CN; 20231009 - 20231013, 29 September 2023 (2023-09-29), XP052529841, Retrieved from the Internet <URL:https://www.3gpp.org/ftp/TSG_RAN/WG2_RL2/TSGR2_123bis/Docs/R2-2310853.zip R2-2310853 Bluetooth.docx> [retrieved on 20230929]
- "3 Generation Partnership Project; Technical Specification Group Radio Access Network; LTE Positioning Protocol (LPP) (Release 17)", 30 June 2023 (2023-06-30), XP052514108, Retrieved from the Internet <URL:https://ftp.3gpp.org/3guInternal/3GPP_ultimate_versions_to_be_transposed/sentToDpc/37355-h50.zip 37355-h50.docx> [retrieved on 20230630]

## Description

### Technical field

The present disclosure relates to the field of positioning or localization, especially to short-range positioning within Internet Protocol, IP, based networks. Specifically, this disclosure is directed to a method for configuring a device for short-range positioning based on Angle-of-Arrival, AoA, and/or Angle-of-Departure, AoD, estimation within an IP based network, a device, a location server, a computer program product and a computer readable medium.

### Background

Positioning or localization of mobile devices, i.e. determining the position or location of mobile devices, is widely implemented and employed to realize for instance various Location Based Services, LBS. For determining the position of a device different methods or technologies exist which are employed depending upon the use case and the device's capabilities. For example, the Global Navigation Satellite System, GNSS, is used for outdoor applications requiring high accuracy, while short-range wireless technologies are employed in indoor scenarios and/or on devices with reduced capabilities. Mobile radio cellular positioning is another possibility to localize a device.

Recently, hybrid solutions have emerged, which rely on two or more of these technologies. For instance, GNSS and short-range wireless based positioning are combined, or short-range wireless and mobile radio cellular based localization are used in combination. Many of these solutions re-use a mobile communication network like 2G, 3G, long-term evolution, LTE, 4G or 5G as a framework for realizing LBS. For the exchange of related information protocols are employed or re-used. According to the well-known all IP approach, these protocols are IP-based and achieve a bearer agnostic realization.

Such generic IP-based protocols may need to be adapted to the different location technologies in order to properly support each technology's specific features. Known solutions have been found to impose limitations, for example, with respect to the number of devices that can be handled or localized concurrently by one reference source, e.g. anchor point.

An objective may therefore be seen in providing a method, a device and a location server which overcome the shortcomings of the state of the art. In particular, a solution shall be provided which improves the performance and efficiency of the positioning.

This objective is achieved by the subject-matter of the independent claims. Embodiments and developments are defined in the dependent claims. Any examples and embodiments of the description not falling within the scope of the claims do not form part of the invention as defined by the independent claims.

The definitions provided above also apply to the following description unless stated otherwise.

WO 2022/020037 A1 describes an implementation that a user equipment (UE) provides to a location server a recommendation or request for positioning technologies and/or methods that may be appropriate for the environment in which the UE is located.

RITESH SHREEVASTAV ET AL: "Adding support for Bluetooth AoA/AoD" proposes updates in the LTE Positioning Protocol to support for Bluetooth AoA/AoD.

US 2021/410102 A1 describes a method that a user equipment (e.g., a mobile device) may receive a location request message from a server (e.g., a Location Management Function), wherein the location request message identifies a plurality of Quality of Service parameters for the LTE Positioning Protocol (LPP) positioning session.

"3 Generation Partnership Project; Technical Specification Group Radio Access Network; LTE Positioning Protocol (LPP) (Release 17)" describes the definition of the LTE Positioning Protocol (LPP) for the radio access technologies E-UTRA/LTE and NR.

### Summary

In one embodiment a method for configuring a device for short-range positioning based on AoA and/or AoD estimation within an IP based network comprises the following steps:
receiving, by the device, from a location server a configuration message, which enables the device to determine whether to enter either a first mode of operation or a second mode of operation, wherein in the first mode of operation a standard short-range positioning is applied and wherein in the second mode of operation a proprietary short-range positioning is applied,
operating, by the device, either in the first or in the second mode of operation according to the configuration message, and
sending, by the device, a confirmation message indicating successful configuration of the device.

By means of the proposed method, the device can be remotely controlled by configuring it for operation in either the first or the second mode. In the first mode, the device realizes the standard short-range positioning, which represents the least common denominator for interoperation between different manufacturers. In the second mode of operation, the device uses the proprietary short-range positioning technology or method as instructed with the configuration message. In the second mode, limitations of the standard based short-range positioning do not necessarily have to apply. Therefore, the proposed method provides for improvements in comparison to known solutions.

The method is employed in a scenario in which the location server and the device are each realized as a node in an IP based network, i.e. a network that relies on the Internet Protocol in its network layer, as defined in the OSI model. In such IP based network, different technologies may be employed for the physical layer and data link layer, for instance a mobile communication network as defined above, or a Wi-Fi network.

The confirmation message signifies successful receipt of the configuration message and successful configuration of the device according to the configuration message.

During operation by the device in the standard short-range positioning of the first mode according to Bluetooth, especially BLE 5.1 or higher, and/or according to UWB, primary and secondary channels are used. During operation by the device in the proprietary short-range positioning of the second mode according to Bluetooth and/or according to UWB, only the primary channels are used.

The support for AoA/AoD in Bluetooth, especially BLE 5.1, is based on a signal extension called Continuous Tone Extension, CTE, which can be configured. Analogously, periodic advertisements can be configured. For positioning using AoA, an anchor point may perform direction finding by evaluating CTE signals transmitted from tags, i.e. a CTE message is decoded and evaluated by an anchor point, which therefrom provides an angle. For direction finding based on AoD, a device, respectively a tag, evaluates CTEs transmitted from anchors. According to the standard intervals between two subsequent CTE messages can be configured from 10 milliseconds to about 10 seconds. The configuration of intervals between CTE transmissions and of the frequency of periodic advertisement messages result in a certain number of tags, which can be handled by one anchor point concurrently.

Furthermore, the Bluetooth SIG defines the usage of primary and secondary advertising channels for AoA/AoD estimation in its short-range positioning. Primary channels are the channels number 37, 38 and 39. Accordingly, in the first mode of operation, the primary and the secondary advertising channels are employed as defined in the standard by the Bluetooth SIG. In the second mode of operation, only the primary advertising channels are used. This achieves a reduction in periodic advertisement in the second mode compared to the BT SIG standard implementation. Consequently, an anchor point can handle more tags per time unit. This can be advantageous in a use case in which multiple tags enter an area where they need to be located.

In a development, the standard short-range positioning of the first mode comprises one of Bluetooth, especially Bluetooth Low Energy, BLE, 5.1 or higher as defined by the Bluetooth Special Interest Group, BT SIG, and Ultra-Wideband, UWB, as defined by IEEE 802.15.4x, where x represents any letter of a specification as defined by the IEEE 802.15.4 task group. The proprietary short-range positioning of the second mode comprises one of Bluetooth, especially BLE 5.1 or higher, and UWB each of which is based on the corresponding standard short-range positioning and includes one or more proprietary extensions and/or limitations.

As known to the skilled person, support for AoA/AoD based positioning estimation is defined for Bluetooth, especially BLE 5.1 as released in January 2019. Furthermore, such support is defined in UWB. The proprietary short-range positioning of the second mode for the purpose of this description for the case of Bluetooth is based on Bluetooth, especially BLE 5.1 or higher, as defined by BT SIG and includes one or more proprietary limitations and/or extensions with respect to the standard. Such deviations from the standard may also be referred to as manufacturer-specific features and may result in an amendment, addition or supplement or limitation to the set of features defined in the standard. Likewise, the proprietary UWB is based on the UWB as defined by IEEE 802.15.4x and includes one or more proprietary extensions and/or limitations with respect to the feature set defined in the standard. The proprietary short-range positioning in each case is partially compliant to the corresponding standard.

In a development, during operating by the device in the proprietary short-range positioning of the second mode, at least two CTE messages are sent, wherein an interval between the at least two CTE messages is adjusted according to the configuration message, in particular the interval is adjusted to a value greater than that defined in the standard.

This means that the interval between the at least two CTE messages can be adjusted to be greater than 10 seconds. This results in the ability of an anchor point to handle even more tags or devices per time unit, which achieves higher efficiency and improves the performance of the positioning. Handling tags refers to an anchor point's ability of having tags in a so-called synch list, so that the anchor point can decode CTE messages received from these tags and estimate respective AoAs accordingly. It is to be understood that more than two CTE messages may be transmitted during positioning of the device. In the second mode a time interval between every two successive CTE messages is adjusted as instructed with the configuration message. In other words, in the second mode the positioning in the location server or positioning engine is based on at least two CTE messages sent in the interval adjusted according to the configuration message.

In a development, the configuration message is received via a Long-term evolution, LTE, Positioning Protocol, LPP.

The LPP is, for instance, defined in 3GPP Release 18 for support of CTE configuration and periodic advertisement according to BT SIG. By means of the proposed method the LPP is extended and reused for configuring the device, respectively the tag, for operation in the second mode, which leverages proprietary implementations, leading to improved performance and efficiency.

In a development, the configuration message is characterized by comprising an information element identifying the first or the second mode of operation.

The information element may be represented, for example, by one bit, which may be an existing bit or an additional bit of the employed IP based protocol, for instance the LPP. Said information element of the configuration message is evaluated by the device for determining whether to enter the first or the second mode of operation. In the case that an existing bit is reused for the proposed purpose, the meaning of said bit is redefined.

In an exemplary implementation the information element is realized in an LPP message as one or more bits in one of the BT-ProvideLocationInformation fields, e.g. btAddr, advInterval, cteLength, cteCount, tx-PHY-r18.

In one embodiment a device is provided which is configured to execute the method according to any of the embodiments or developments described above.

The device may be implemented as a user element, UE, according to the terminology used within the 3GPP, or as a tag according to the definitions of Bluetooth, or as a UWB device, or as an Internet of things, IoT, device, or as a combination of the listed devices. For enabling execution of the above-described method, the device comprises processing means, storage means and means for communication.

According to the proposed concept, the device is enabled to be remotely configured for short-range positioning using AoA and/or AoD estimation via an Internet Protocol, especially via LPP. Said configuration achieves that the device is operated in either the first mode of operation which uses a standard compliant short-range positioning technology, or in the second mode of operation in which a proprietary version of a short-range positioning technology or method is used. In the second mode the device is configured, for example in the case of Bluetooth, to use only primary advertisement channels and a CTE interval corresponding to the AoA/AoD anchor configuration. This enables the anchor to handle more tags per time unit.

In one embodiment a system is provided comprising the device according to any of the embodiments or developments described above and a location server. The location server is prepared to configure the device for short-range positioning based on AoA and/or AoD estimation within an IP based network by generating and sending a configuration message to the device. Said message enables the device to determine whether to enter either a first mode of operation or a second mode of operation. In the first mode of operation, a standard short-range positioning is applied and in the second mode of operation a proprietary short-range positioning is applied. The location server is further prepared to receive a confirmation message from the device. This message indicates successful configuration of the device.

The location server may also be referred to as a positioning engine. For remotely configuring the device for short-range positioning in a way which goes beyond capabilities defined in related standards such as Bluetooth or UWB, the location server generates and sends the configuration message. Consequently, when configuring the device to the second mode of operation, subsequent AoA/AoD based positioning can be realized with better performance and higher efficiency by exploiting elaborated features of the proprietary extensions when compared to the pure standards based lowest common denominator features of the first mode.

As already described above, in some developments, in the first mode of operation standard compliant short-range positioning is employed, for example according to Bluetooth SIG or IEEE 802.15.4x. In the second mode of operation, a proprietary short-range positioning technology is used, for example Bluetooth or UWB which is based on the respective standard and includes one or more proprietary limitations and/or extensions.

In the exemplary case of Bluetooth, in the first mode of operation the device is configured to use primary and secondary advertising channels as defined by the BT SIG. In the second mode of operation, the device is configured to use only the primary advertising channels. Consequently, in the second mode complexity of the advertisement is reduced, such that an access point may handle more devices concurrently.

In a development the location server is prepared to send the configuration message via the LPP.

By this, the location server is enabled to control and change, for example, CTE configurations and firmware in tags between BT 5.1 compliant mode, i.e. the first mode of operation, and a proprietary mode, i.e. the second mode of operation.

In an embodiment a computer program product comprises instructions to cause the device defined above to execute the method according to the embodiments described above.

According to an implementation option the method may be realized as firmware.

In one embodiment a computer readable medium has the computer program as specified above stored thereon.

### Brief description of the drawings

The text below explains the proposed solution in detail using exemplary embodiments with reference to the drawings. Components and elements that are functionally identical or have an identical effect bear identical reference numbers. Insofar as parts or components correspond to one another in their function, a description of them will not be repeated in each of the following figures. Therein,
Figure 1 shows embodiment examples of a device and a location server, each as proposed, in an exemplary scenario for a method as proposed,
Figure 2 shows an exemplary embodiment of the method as proposed.

### Detailed description

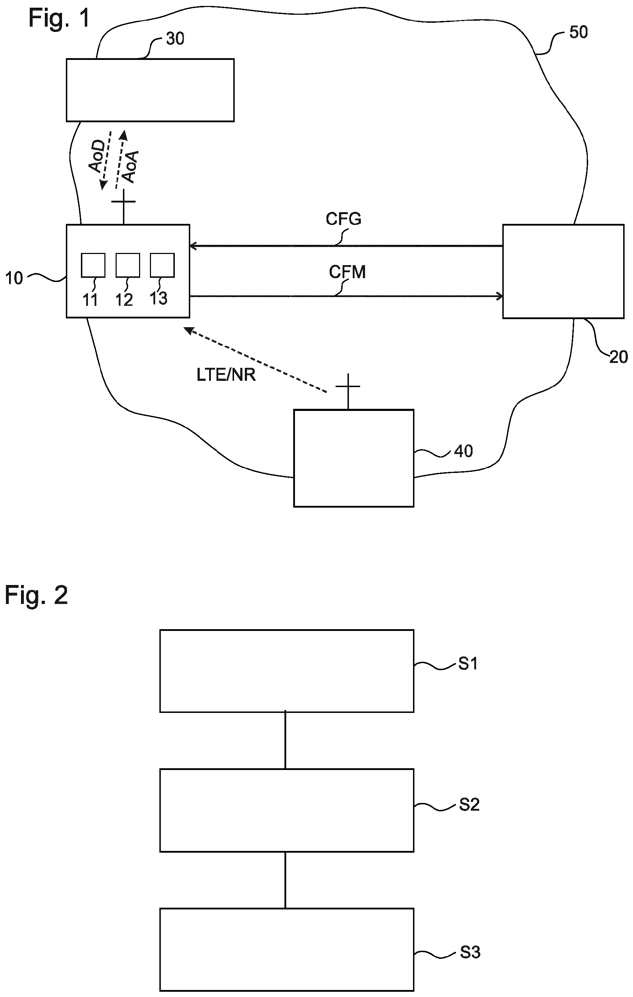

Figure 1 shows embodiment examples of a device and a location server, each as proposed, in an exemplary scenario for a method for configuring the device for short-range positioning based on AoA and/or AoD estimation within an IP based network as proposed. In the depicted scenario a device 10 and a location server 20, each of which are realized as proposed and described above, are both coupled to an IP based network 50. The device 10 may be realized as a UE according to 3GPP terminology and/or as a tag according to the Bluetooth or UWB terminology. In essence, device 10 is the target device in the short-range positioning. The location server 20 can be realized as a 3GPP compliant location server or, alternatively or additionally, as a Bluetooth positioning engine. In each case the location server 20 may be realized as a separate physical entity or as a software module which is executed on some server in the IP based network 50.

Device 10 comprises processing means 11, storage means 12 and means for communication 13.

According to the proposed method, the device 10 is configured for short-range positioning using AoA and/or AoD estimation within the IP based network 50 in that the location server 20 sends a configuration message CFG to the device 10 using for example an LTE or 5G or 5G NR network; the configuration message enables the device 10 to determine whether to enter either a first mode of operation in which a standard compliant short-range positioning is used, or to enter a second mode of operation in which a proprietary short-range positioning is applied; device 10 then operates in the first or the second mode of operation according to the configuration message CFG; the device 10 also sends a confirmation message CFM back to the server 20 in order to acknowledge successful configuration using for example the LTE or 5G or 5G NR network.

Consequently, remote configuration of the device 10 is enabled which achieves a higher flexibility in the implementation, because the device 10 can be configured to work standard compliant or in a proprietary mode for the short-range positioning. Furthermore, in the proprietary mode optimizations can be leveraged as described above.

For the subsequent actual short-range positioning, different reference sources, here exemplary first reference source 30 and second reference source 40, are employed. Therein the first reference source 30 may be realized as a Bluetooth anchor point and the second reference source 40 may be realized as a base station, or an eNodeB of a 3GPP network. Both reference sources 30 and 40 are also connected to the IP based network 50. For short-range positioning of device 10 with support of the Bluetooth anchor point 30, radio signals are exchanged between these entities for estimation of an AoA or an AoD depending on the use case and the application. The anchor point 30 may thereby operate according to the Bluetooth SIG or in a Bluetooth proprietary mode. The device 10 is also prepared to work either in a Bluetooth SIG compliant mode or in a Bluetooth proprietary mode. The location server 20 by means of the proposed method, is enabled to configure the device 10, i.e. to work in the standards compliant Bluetooth mode, i.e. the first mode of operation, or in the proprietary mode, i.e. the second mode of operation. In the subsequent positioning, if the proprietary mode is configured in the device 10 according to the second mode operation, only the primary advertising channels as defined in Bluetooth are used. Also, an interval between any two subsequent CTE messages is configured to be greater than a value defined in the standard. By applying both measures, the anchor point 30 may handle more of target devices 10 in one time unit, thereby achieving high efficiency.

The IP based network 50 may be based on OSI layers one and two as defined in the 3GPP or on Wi-Fi. In any case, an Internet Protocol is employed for communication. In a 3GPP compliant implementation, the LPP is used for exchanging messages between the location server 20 and the device 10. For this, the configuration message CFG, which is an LPP message, has an information element which is representative of the first or the second mode of operation, such that the device 10 is enabled to determine which mode it shall enter. The confirmation message CFM in this case also is an LPP message.

In other cases of IP based networks which are not 3GPP compliant, another IP based protocol, for instance Transport Control Protocol, TCP, or User Datagram protocol, UDP is employed for transmission of the configuration message CFG and the confirmation message CFM.

According to the proposed solution, a standards-based protocol, for instance the LPP, is used to configure the device 10 to work according to the Bluetooth SIG standard or in a proprietary mode which is only partially SIG compliant. The second reference source 40 implementing mobile radio cellular positioning may be additionally employed in the positioning of the device 10 for enhancing the short-range positioning or vice versa.

Figure 2 shows an exemplary embodiment of a method as proposed. The method for configuring a device for short-range positioning based on AoA and/or AoD estimation within an IP based network comprises the following steps:
S1: receiving by the device from a location server a configuration message, which enables the device to determine whether to enter either a first mode of operation or a second mode of operation, wherein in the first mode of operation a standard short-range positioning is applied and wherein in the second mode of operation a proprietary short-range positioning is applied,
S2: operating, by the device, either in the first or in the second mode of operation according to the configuration message, and
S3: sending, by the device, a confirmation message indicating successful configuration of the device.

The method enables remote configuration of the device for operation in either a standard compliant or a proprietary mode.

It will be appreciated that the invention is not limited to the disclosed embodiments and to what has been particularly shown and described hereinabove. Rather, features recited in separate dependent claims or in the description may advantageously be combined. Furthermore, the scope of the invention includes those variations and modifications which will be apparent to those skilled in the art and fall within the scope of the appended claims. Exemplary names used above shall not be regarded as limiting the scope of the invention. The term "comprising" used in the claims or in the description does not exclude other elements or steps of a corresponding feature or procedure. In the case that the terms "a" or "an" are used in conjunction with features, they do not exclude a plurality of such features. Moreover, any reference signs in the claims should not be construed as limiting the scope.

## Claims

1. A method for configuring a device for short-range positioning based on Angle-of-Arrival, AoA, and/or Angle-of-Departure, AoD, estimation within an Internet Protocol, IP, based network, the method comprising the following steps:
receiving (S1), by the device (10), a configuration message (CFG) from a location server (20), which configuration message enables the device to determine whether to enter either a first mode of operation or a second mode of operation, wherein in the first mode of operation a standard short-range positioning is applied and wherein in the second mode of operation a proprietary short-range positioning is applied,
operating (S2), by the device, either in the first or in the second mode of operation according to the configuration message, and
sending (S3), by the device, a confirmation message indicating successful configuration of the device;
wherein during operating (S2), by the device, in the standard short-range positioning of the first mode according to Bluetooth, especially BLE 5.1 or higher, and/or according to UWB, primary and secondary advertising channels as defined in Bluetooth and/or UWB are used, and
wherein during operating (S2), by the device, in the proprietary short-range positioning of the second mode according to Bluetooth and/or according to UWB, only the primary advertising channels as defined in Bluetooth and/or UWB are used.

2. The method according to claim 1,
wherein the standard short-range positioning of the first mode comprises one of Bluetooth, especially Bluetooth Low Energy, BLE, 5.1 or higher as defined by Bluetooth Special Interest Group, BT SIG, and Ultra-Wideband, UWB, as defined by IEEE 802.15.4x, and
wherein the proprietary short-range positioning of the second mode comprises one of Bluetooth, especially BLE 5.1 or higher, and UWB, each of which is based on the corresponding standard short-range positioning and includes one or more proprietary extensions and/or limitations.

3. The method according to claim 1 or 2,
wherein during operating (S2), by the device, in the proprietary short-range positioning of the second mode at least two Continuous Tone Extension, CTE, messages are sent,
wherein an interval between the at least two CTE messages is adjusted according to the configuration message (CFG), in particular the interval is adjusted to a value greater than defined in the standard.

4. The method according to any of claims 1 to 3,
wherein the configuration message (CFG) is received via a Long-term evolution, LTE, Positioning Protocol, LPP.

5. The method according to any of claims 1 to 4,
wherein the configuration message is **characterized by** comprising an information element identifying the first or the second mode of operation.

6. A device which is configured to execute the method according to any of claims 1 to 5.

7. A system comprising the device (10) according to claim 6 and a location server which is prepared to configure the device (10) for short-range positioning based on Angle-of-Arrival, AoA, and/or Angle-of-Departure, AoD, estimation within an Internet Protocol, IP, based network by generating and sending the configuration message (CFG) to the device (10),
wherein the location server (20) is further prepared to receive the confirmation message (CFM) from the device.

8. A computer program comprising instructions , which when executed by a device, cause the device to perform the method according to any of claims 1 to 5.

9. A computer readable medium having stored thereon the computer program according to claim 8.

## Patentansprüche

1. Verfahren zum Konfigurieren eines Geräts für die Nahbereichsortung auf der Grundlage der Schätzung des Ankunftswinkels, AoA, und/oder des Abflugwinkels, AoD, innerhalb eines auf dem Internetprotokoll, IP, basierenden Netzwerks, wobei das Verfahren die folgenden Schritte umfasst:
Empfangen (S1) einer Konfigurationsnachricht (CFG) durch das Gerät (10) von einem Standortserver (20), wobei die Konfigurationsnachricht es dem Gerät ermöglicht, zu bestimmen, ob es entweder in einen ersten Betriebsmodus oder in einen zweiten Betriebsmodus wechseln soll, wobei im ersten Betriebsmodus eine standardmäßige Nahbereichsortung angewendet wird und wobei im zweiten Betriebsmodus eine proprietäre Nahbereichsortung angewendet wird,
Betreiben (S2) durch das Gerät entweder im ersten oder im zweiten Betriebsmodus gemäß der Konfigurationsnachricht, und Senden (S3) einer Bestätigungsnachricht durch das Gerät, die die erfolgreiche Konfiguration des Geräts anzeigt;
wobei während des Betriebs (S2) durch das Gerät in der standardmäßigen Nahbereichsortierung des ersten Modus gemäß Bluetooth, insbesondere BLE 5.1 oder höher, und/oder gemäß UWB, primäre und sekundäre Advertising-Kanäle, wie in Bluetooth und/oder UWB definiert, verwendet werden, und
wobei während des Betriebs (S2) durch das Gerät in der proprietären Nahbereichsortierung des zweiten Modus gemäß Bluetooth und/oder gemäß UWB, nur die in Bluetooth und/oder UWB definierten primären Advertising-Kanäle verwendet werden.

2. Verfahren nach Anspruch 1,
wobei die standardmäßige Nahbereichsortung des ersten Modus eines der folgenden umfasst: Bluetooth, insbesondere Bluetooth Low Energy, BLE, 5.1 oder höher, wie von der Bluetooth Special Interest Group, BT SIG, definiert, und Ultra-Wideband, UWB, wie durch IEEE 802.15.4x definiert, und
wobei die proprietäre Nahbereichsortierung des zweiten Modus eines von Bluetooth, insbesondere BLE 5.1 oder höher, und UWB umfasst, von denen jedes auf der entsprechenden standardmäßigen Nahbereichsortierung basiert und eine oder mehrere proprietäre Erweiterungen und/oder Einschränkungen beinhaltet.

3. Verfahren nach Anspruch 1 oder 2,
wobei während des Betriebs (S2) durch das Gerät in der proprietären Nahbereichsortierung des zweiten Modus mindestens zwei Continuous Tone Extension, CTE, Nachrichten gesendet werden, wobei ein Intervall zwischen den mindestens zwei CTE-Nachrichten entsprechend der Konfigurationsnachricht (CFG) angepasst wird, insbesondere wird das Intervall auf einen Wert angepasst, der größer ist als der im Standard definierte.

4. Verfahren nach einem der Ansprüche 1 bis 3,
wobei die Konfigurationsnachricht (CFG) über ein Long-Term-Evolution, LTE, Positionierungsprotokoll, LPP, empfangen wird.

5. Verfahren nach einem der Ansprüche 1 bis 4,
wobei die Konfigurationsnachricht **dadurch gekennzeichnet ist, dass** sie ein Informationselement umfasst, das den ersten oder den zweiten Betriebsmodus identifiziert.

6. Ein Gerät, das dazu ausgelegt ist, das Verfahren gemäß einem der Ansprüche 1 bis 5 auszuführen.

7. Ein System, das das Gerät (10) gemäß Anspruch 6 und einen Standortserver umfasst, der dazu ausgelegt ist, das Gerät (10) für die Nahbereichsortierung auf der Grundlage einer Schätzung des Ankunftswinkels, AoA, und/oder des Abflugwinkels, AoD, innerhalb eines auf dem Internetprotokoll, IP, basierenden Netzwerks zu konfigurieren, indem er die Konfigurationsnachricht (CFG) generiert und an das Gerät (10) sendet,
wobei der Standortserver (20) ferner dazu ausgelegt ist, die Bestätigungsnachricht (CFM) von dem Gerät zu empfangen.

8. Ein Computerprogrammprodukt, das Anweisungen umfasst, die, wenn sie von einem Gerät ausgeführt werden, bewirken, dass das Gerät das Verfahren gemäß einem der Ansprüche 1 bis 5 ausführt.

9. Ein computerlesbares Medium, auf dem das Computerprogramm gemäß Anspruch 8 gespeichert ist.

## Revendications

1. Procédé de configuration d'un dispositif de positionnement à courte portée basé sur l'estimation de l'angle d'arrivée, AoA, et/ou de l'angle de départ, AoD, au sein d'un réseau basé sur le protocole Internet, IP, le procédé comprenant les étapes suivantes :
réception (S1), par le dispositif (10), d'un message de configuration (CFG) provenant d'un serveur de localisation (20), lequel message de configuration permet au dispositif de déterminer s'il doit passer soit à un premier mode de fonctionnement, soit à un second mode de fonctionnement, dans lequel, dans le premier mode de fonctionnement, un positionnement standard à courte portée est appliqué et dans lequel, dans le second mode de fonctionnement, un positionnement propriétaire à courte portée est appliqué, fonctionnement (S2), par le dispositif, soit dans le premier mode de fonctionnement, soit dans le second mode de fonctionnement, conformément au message de configuration, et l'envoi (S3), par le dispositif, d'un message de confirmation indiquant que la configuration du dispositif a réussi ;
dans lequel, pendant le fonctionnement (S2), du dispositif en mode de positionnement standard à courte portée du premier mode selon Bluetooth, en particulier BLE 5.1 ou supérieur,
et/ou selon UWB, les canaux de publicité primaire et secondaire tels que définis dans Bluetooth et/ou UWB sont utilisés, et
dans lequel, pendant le fonctionnement (S2), du dispositif en mode de positionnement propriétaire à courte portée du deuxième mode selon Bluetooth et/ou selon UWB, seuls les canaux de publicité primaires tels que définis dans Bluetooth et/ou UWB sont utilisés.

2. Procédé selon la revendication 1,
dans lequel le positionnement standard à courte portée du premier mode comprend l'un parmi Bluetooth, en particulier Bluetooth Low Energy, BLE, 5.1 ou supérieur tel que défini par le Bluetooth Special Interest Group, BT SIG, et l'Ultra-Wideband, UWB, tel que défini par la norme IEEE 802.15.4x, et dans lequel le positionnement propriétaire à courte portée du deuxième mode comprend l'un parmi Bluetooth, en particulier BLE 5.1 ou supérieur, et UWB, chacun d'entre eux étant basé sur le positionnement standard à courte portée correspondant et incluant une ou plusieurs extensions et/ou limitations propriétaires.

3. Procédé selon la revendication 1 ou 2,
dans lequel, pendant le fonctionnement (S2) du dispositif, dans le positionnement propriétaire à courte portée du deuxième mode, au moins deux messages d'extension de tonalité continue, CTE, sont envoyés, l'intervalle entre lesdits au moins deux messages CTE étant ajusté en fonction du message de configuration (CFG), en particulier l'intervalle étant ajusté à une valeur supérieure à celle définie dans la norme.

4. Procédé selon l'une quelconque des revendications 1 à 3, dans lequel le message de configuration (CFG) est reçu via un protocole de positionnement LTE, LPP.

5. Procédé selon l'une quelconque des revendications 1 à 4, dans lequel le message de configuration est **caractérisé en ce qu'**il comprend un élément d'information identifiant le premier ou le deuxième mode de fonctionnement.

6. Dispositif configuré pour mettre en œuvre le procédé selon l'une quelconque des revendications 1 à 5.

7. Système comprenant le dispositif (10) selon la revendication 6 et un serveur de localisation qui est conçu pour configurer le dispositif (10) en vue d'un positionnement à courte portée sur la base d'une estimation de l'angle d'arrivée, AoA, et/ou de l'angle de départ, AoD, au sein d'un réseau basé sur le protocole Internet, IP, en générant et en envoyant le message de configuration (CFG) au dispositif (10),
dans lequel le serveur de localisation (20) est en outre conçu pour recevoir le message de confirmation (CFM) provenant du dispositif.

8. Produit logiciel comprenant des instructions qui, lorsqu'elles sont exécutées par un dispositif, amènent ce dernier à mettre en œuvre le procédé selon l'une quelconque des revendications 1 à 5.

9. Support lisible par ordinateur sur lequel est stocké le programme informatique selon la revendication 8.
